**Europäisches Patentamt**

**European Patent Office**

**Office européen des brevets**

(11) Veröffentlichungsnummer: **0 689 259 A1**

# (12) EUROPÄISCHE PATENTANMELDUNG

(21) Anmeldenummer: **95104024.5**

(22) Anmeldetag: **18.03.95**

(51) Int. Cl.⁶: **H01M 10/34**, H01M 4/24, H01M 10/28

(30) Priorität: **20.05.94 DE 4417732**

(43) Veröffentlichungstag der Anmeldung:
**27.12.95 Patentblatt 95/52**

(84) Benannte Vertragsstaaten:
**BE DE FR GB NL**

(71) Anmelder: **VARTA Batterie Aktiengesellschaft
Am Leineufer 51
D-30419 Hannover (DE)**

(72) Erfinder: **Klaus, Christoph
Hans-Erdner-Strasse 6
D-73479 Ellwangen (DE)**

Erfinder: **Simon, Gerd
Lorsbacher Strasse 22
D-65779 Kelkheim (DE)**
Erfinder: **Köhler, Uwe, Dr.
In den Padenwiesen 23
D-65779 Kelkheim (DE)**
Erfinder: **Kannler, Horst
60 Bayshore Rd. 02-01
Singapur 1646 (SG)**

(74) Vertreter: **Kaiser, Dieter Ralf, Dipl.-Ing. et al
Gundelhardtstrasse 72
D-65779 Kelkheim (DE)**

(54) **Gasdichter Nickel/Hydrid-Akkumulator vom Rundzellentyp**

(57) Bei einem gasdichten Ni/Hydrid-Akkumulator vom Rundzellentyp der Baugröße AA und mit $K_{max}$ = 2 Ah liegen beiden Elektrodenpolaritäten Masse-Elektroden in Form von Pulverpreßlingen zugrunde, wobei die positive $Ni(OH)_2$-Elektrode aus einem Stapel ringförmiger Preßkörper (2), die negative Elektrode aus einem Stapel zylindrischer Preßkörper (3) aus einer Wasserstoffspeicherlegierung besteht und beide Stapel zusammen mit einem zwischenliegenden Separator (5) eine koaxiale Anordnung bilden, welche den Querschnitt des Gehäusebechers (1) vollständig ausfüllt. Die zylindrischen Preßkörper besitzen Bohrungen (4), in die sich der mit dem Deckel (6) verbundene Ableiternagel (7) beim Schließen der Zelle eindrückt. Die Herstellung der Zelle ist mit Standardbauteilen und Standardmethoden aus der Alkali-Mangan-Primärzellenproduktion (Typ Mignon) möglich und dadurch sehr kostengünstig.

Fig. 3

EP 0 689 259 A1

Die Erfindung betrifft einen gasdichten Nikkel/Hydrid-Akkumulator vom Rundzellentyp mit einer positiven Nickelhydroxidelektrode, einer negativen Elektrode, deren aktives Material eine Wasserstoffspeicherlegierung umfaßt, und mit einem die Elektroden trennenden Separator.

Den heute handelsüblichen Nickel/Hydrid-Akkumulatoren nach dem vorstehenden Gattungsbegriff liegt im allgemeinen das Konstruktionsprinzip der Wickelzelle zugrunde. Bei dieser bilden dünne, großflächige und flexible Elektroden zusammen mit einem zwischenliegenden Separator einen Wickel, der in einen zylindrischen Gehäusebecher aus vernickeltem Stahlblech eingesetzt ist. Ein Zellendekkel, der den Gehäusebecher dicht verschließt und gegen diesen isoliert ist, steht in elektrischem Kontakt zu einer der Wickelelektroden und bildet den einen Zellenpol, der Becherboden den anderen Zellenpol.

Insoweit unterscheiden sich gebräuchliche Nikkel/Hydrid-Akkumulatoren etwa der in der EP-PS 419221 beschriebenen Art grundsätzlich nicht von den bekannten Ni/Cd-Akkumulatoren in der Rundzellen-Ausführung. Allen darin verwendeten Elektroden ist gemeinsam, daß sie metallische Trägergerüste besitzen, auf welche das aktive Material mittels unterschiedlicher, teils aufwendiger Techniken aufgebracht ist. Die Elektroden des Ni/Cd-Akkumulators vom Rundzellentyp sind im allgemeinen Sinterelektroden, deren Träger aus einer dünnen, gelochten Nickelfolie mit aufgesintertem Nickelpulver besteht.

Sowohl für die Elektroden des Ni/Cd-Akkumulators als auch für diejenigen des Ni/Hydrid-Akkumulators stehen aber auch andere Trägermaterialien wie feinmaschige Metallnetze, Streckmetalle oder Metallschaumgerüste zur Wahl. So lassen sich dank einer entwickelten Elektrodentechnologie durch Auswalzen einer Trockenmischung aus dem jeweiligen Aktivmaterial, z.B. eines $H_2$-speicherfähigen Legierungspulvers und eines Zusatzes von Leit- und Bindemitteln sehr dünne Laminate erzeugen und diese anschließend in ein Nickelnetz einwalzen. Auf ähnliche Weise werden Nickelhydroxidelektroden aus einer Trockenmischung von Nickelhydroxid mit Zusätzen u.a. von Nickelpulver und PTFE-Pulver als Bindemittel in Form von Walzelektroden hergestellt.

Bei einer sogenannten Foam-Elektrode liegt ein Metallschaumträger, gewöhnlich aus Nickel, vor. Der Metallschaum zeichnet sich durch extrem hohe Porosität -sein Porenvolumen erreicht mindestens 95%- und durch ein hohes elektrisches Leitvermögen aus. In das offene Porensystem dieses Gerüstkörpers wird die Aktivmasse durch Einschlämmen oder Einpastieren eingebracht und die Elektrode anschließend getrocknet.

Für die Stromableitung, die mechanische Festigkeit und Handhabbarkeit bei der Montage von Band- oder Wickelelektroden sind die eben genannten Metallarmierungen unerläßlich. Ihr Nachteil besteht allerdings in einem erheblichen Totgewicht und den Herstellkosten, welche die Elektroden insgesamt empfindlich verteuern.

Diesen Nachteil besitzt auch eine aus der DE-OS 2256077 bekannte Sekundärzelle, deren Elektrodenbestückung aus zwei sinterkeramischen, porösen Metallrohren besteht, die dank einer leichten Konizität teleskopartig unter Zwischenlage eines Trennelements ineinandergesteckt sind und von denen das eine Rohr mit einem positiven, das andere Rohr mit einem negativen Aktivmaterial imprägniert ist. Durch den verbleibenden zylindrischen Hohlraum bei dieser Elektrodenanordnung weist die bekannte Rundzelle nicht nur ein erhebliches Totvolumen auf, sondern läßt auch wegen des umfangreichen metallischen Gerüstmaterials der Elektroden keine hohe Energiedichte erwarten.

Schließlich ist aus dem VARTA-Fachbuch "Gasdichte Nickel-Cadmium-Akkumulatoren" (VDI Verlag GmbH, Düsseldorf, 1978), Seite 155/156, eine ganz ähnliche Anordnung von Masse-Elektroden in einer zylindrischen Zelle bekannt, nur mit dem Unterschied, daß positive und negative Elektrode nicht in Form von Rohren, sondern als zu Halbschalen geformte Pulverpreßlinge ineinandergefügt sind.

Derartige alkalische Rundzellen haben sich beim Ni/Cd-System aber nicht durchgesetzt, weil ihre Strombelastbarkeit sich als unzureichend erwies. Hinzu kommt, daß das Separatorvolumen zwischen den beiden Masse-Elektroden, anders als bei einer Wickelzelle, nicht ausreicht, um gegenüber dem bei der Ladung gebildeten und bei der Entladung wieder verschwindenden Reaktionswasser eine notwendige Pufferung auszuüben. Der Separator hat entweder einen sehr geringen (entladener Zustand) oder sehr hohen (geladener Zustand) Eletrolyt-Füllgrad und würde im letzteren Fall den Gasverzehr in einer dichten Akkumulatorenzelle verhindern.

Der Erfindung liegt daher die Aufgabe zugrunde, eine Nickel/Hydrid-Sekundärzelle verfügbar zu machen, die mit kostengünstigen Elektroden ausgestattet ist, jedoch in ihrer Strombelastbarkeit und in ihren Kapazitätsdaten den bisherigen Akkumulatoren des Rundzellentyps nicht nachsteht.

Die Aufgabe wird erfindungsgemäß mit einem Nickel/Hydrid-Akkumulator gelöst, wie er in Patentanspruch 1 definiert ist.

Danach hat es sich als günstig erwiesen, für beide Elektrodenpolaritäten der Akkumulatorenzelle Masse-Elektroden in Form von Pulverpreßlingen vorzusehen, die in dem zylindrischen Gehäusebecher koaxial ineinandergefügt angeordnet sind und zusammen mit einem zwischenliegenden Separator den Querschnitt des Gehäusebechers vollständig ausfüllen.

Masse-Elektroden in Gestalt von Pulverpreßtabletten sind an sich die typischen Elektroden von Ni/Cd-Knopfzellen. Diese Zellen besitzen eine geringe Selbstentladung bei Nichtbenutzung und Lagerung, eignen sich aber nur für kleine und mittlere Belastungen. Dabei bedürfen selbst die in den Knopfzellen verwendeten Elektrodentabletten aus $Ni(OH)_2$- und $Cd(OH)_2$-Pulver aus Gründen der mechanischen Stabilität und der besseren Stromableitung einer Metallnetzarmierung, indem sie in ein Körbchen aus Nickeldrahtgewebe eingepreßt werden.

Erfindungsgemäß kann jedoch jegliche metallische Ableitermatrix bei den neuen Elektroden entfallen.

Besonders vorteilhaft wird die positive Elektrode des erfindungsgemäßen Nickel/Hydrid-Akkumulators aus einer Trockenmischung von Nickelhydroxid und Nickelmetallpulver sowie Zusätzen von Kobalt und/oder Kobalthydroxid und einem Bindemittel wie PTFE durch Formung zu ringförmigen Preßkörpern hergestellt, die als Stapel in den Gehäusebecher eingebracht und nochmals verpreßt werden, so daß sie eine röhrenförmige Kathode bilden.

In den Hohlraum der Kathode wird als Anode ein vollzylindrischer Preßkörper, der aus einer Trockenmischung aus pulverförmiger Wasserstoffspeicherlegierung und Zusätzen von PTFE und Ruß besteht und von einem Separator umgeben ist, paßgenau eingesetzt. Der Querschnitt des Gehäusebechers wird durch diese Anordnung zweier Masse-Elektroden erschöpfend ausgenutzt.

Zweckmäßig ist der Anoden-Preßkörper in eine gleiche Anzahl kleinerer Zylinder wie diejenige der Kathodenringe aufgeteilt. Zur Aufnahme eines Ableiternagels besitzen die Anodenzylinder zentrale Bohrungen, deren Durchmesser etwas kleiner als derjenige des Ableiternagels ist. Der Ableiternagel aus vernickeltem Kupfer oder Messing ist Teil des Gehäusedeckels.

Nach Zudosieren des Elektrolyten wird der Gehäusebecher mit dem Deckel, der gegen den Becher elektrisch isoliert ist, fest verschlossen, wobei der Ableiternagel sich in alle Anoden-Zylinder eindrückt und damit ein fester Kontakt zur Hydridelektrode hergestellt wird.

Anhand der Figuren wird der Gegenstand der Erfindung im folgenden verdeutlicht.

Figur 1    zeigt ein Fließschema für den prinzipiellen Fertigungsgang einer erfindungsgemäßen Ni/Hydrid-Zelle.

Figur 2    zeigt die Bestandteile einer erfindungsgemäßen Ni/Hydrid-Zelle in einer Übersicht.

Figur 3    Zeigt den Aufbau einer erfindungsgemäßen Ni/Hydrid-Zelle im Schnitt.

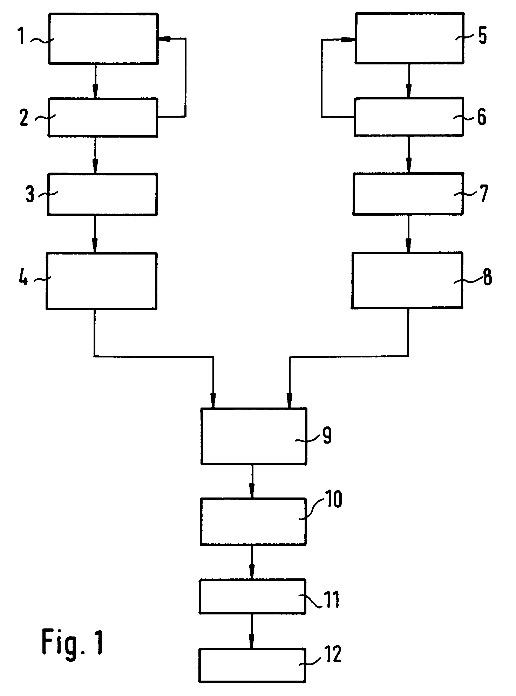

Gemäß Fig. 1 bezeichnen die Positionen 1 bis 12 die verschiedenen Arbeitsgänge bei der Elektrodenfertigung sowie die darauffolgenden Stadien beim Zusammenbau der Zelle.

So umfaßt die Herstellung der positiven Elektrode die Schritte:

1. Mischen von $Ni(OH)_2$, CoO und PTFE (oder PE)

2. Granulieren und Rückführen des anfallenden Feinanteils in das Mischgefäß

3. Pressen der Ringe

4. Einbringen der Ringe in den Becher.

Parallel hierzu erfolgt die Herstellung der negativen Elektrode in den Schritten:

5. Mischen des Legierungsmaterials mit PTFE und Ruß

6. Granulieren und Rückführung des anfallenden Feinanteils in das Mischgefäß

7. Pressen der Zylinder

8. Verpacken der Zylinder in einen Separator

Der Zellenbau setzt sich fort mit den Schritten:

9. Einbringen der Zylinder in den Becher

10. Eindosieren des Elektrolyten

11. Becher mit Deckel verschließen

12. Zelle aktivieren (laden).

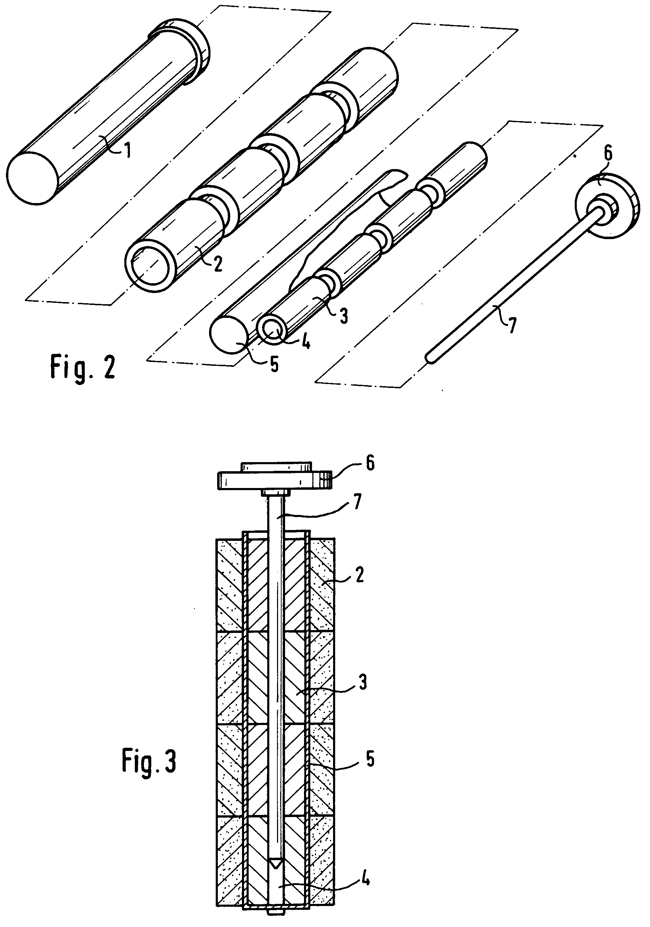

Fig. 2 veranschaulicht die wesentlichen Bestandteile der erfindungsgemäßen Nickel/Hydrid-Zelle, nämlich den Gehäusebecher 1, vier Kathodenringe 2, vier Anodenzylinder 3 mit Bohrungen 4, den Separator 5 und den Gehäusedeckel 6 mit Ableiternagel 7.

Fig. 3 gibt den Zellenaufbau aus den genannten Teilen einschließlich der Separatorhülse 5 in einer Querschnittsdarstellung wieder, dabei ist das die Zellenbestandteile umgebende Gehäuse 1 nicht dargestellt.

Ein besonderer Vorteil der erfindungsgemäß eingesetzten Elektrodenpreßlinge besteht darin, daß sie ausschließlich aus positiven bzw. negativen aktiven Material gebildet sind und keine Armierung, z.B. durch ein zusätzliches Nickelgewebenetz, besitzen. Dies trägt zu einer ganz erheblichen Verbilligung der Herstellkosten bei.

Ein fertigungstechnischer Vorteil für die neue Ni/Hydrid-Rundzelle ergibt sich weiterhin daraus, daß zu ihrer Fertigung weitgehend standardisierte Zellenbecher, Zellendeckel, Ableiternägel und Separatoren verwendet werden können, wie sie in der Fertigung von primären Alkali-Manganzellen produktionsüblich sind und dort massenweise verwendet werden, namentlich für den Bau der sogenannten Mignon-Zelle. Deren $MnO_2$-Ringe sind mit den Ringen der positiven $Ni(OH)_2$-Elektrode in der erfindungsgemäßen Ni/Hydrid-Zelle geometrisch identisch. Die vollzylindrischen Pulverpreßlinge für die negative Hydridelektrode lassen sich mit einfachen Werkzeugen herstellen und mit Bohrungen versehen.

Insgesamt gestaltet sich die Herstellung der erfindungsgemäßen Zelle nicht nur wegen der Verwertbarkeit bereits vorhandener Zellbauteile aus der Primärfertigung, sondern auch wegen der Einsetzbarkeit von Standardwerkzeugen aus diesem Produktionsbereich sehr kostengünstig. Es sind keine weiteren verfahrenstechnischen Neuentwicklungen notwendig, sondern allenfalls Anpassungen bestehender Schritte.

Erfindungsgemäße Ni/Hydrid-Rundzellen vom Format AA (Mignon) können bei einem Auslegungsverhältnis Pos.Elektrode/Neg.Elektrode von 1/1,2 eine Kapazität von maximal 2 Ah erreichen.

Die Strombelastbarkeit ist zwar geringer als bei einer vergleichbaren Ni/Hydrid-Wickelzelle. Deren Kapazitätsmaximum liegt jedoch bei nur 1,5 Ah.

Da beim Ni/Hydrid-Akkumulator -anders als beim Ni/Cd-Akkumulator- kein Wasser in die stromliefernde Umsetzungsgleichung eingeht, erfährt der Separator weder eine totale Füllung noch eine totale Entleerung seiner Poren von im Lade-/Entladerhythmus gebildetem Reaktionswasser. Der Gasverzehr wird dadurch nicht unterbrochen, so daß der Separator trotz kleinen relativen Volumens und geringer Pufferkapazität für Wasser den Anforderungen für eine gasdichte Zellenfunktion vollauf genügt.

**Patentansprüche**

1. Gasdichter Nickel/Hydrid-Akkumulator vom Rundzellentyp mit einer positiven Nickelhydroxidelektrode, einer negativen Elektrode, deren aktives Material eine Wasserstoffspeicherlegierung umfaßt, und mit einem die Elektroden trennenden Separator, dadurch gekennzeichnet, daß beide Elektroden Masse-Elektroden in Form von Pulverpreßlingen sind, die koaxial ineinandergefügt angeordnet sind und zusammen mit einem zwischenliegenden Separator den Querschnitt des Gehäusebechers vollständig ausfüllen.

2. Nickel/Hydrid-Akkumulator nach Anspruch 1, dadurch gekennzeichnet, daß die positive Elektrode aus ringzylindrischen Pulverpreßlingen (2) besteht, die als Stapel in das zylindrische Gehäuse (1) eingepreßt sind und eine röhrenförmige Kathode bilden, und daß der Innenraum der röhrenförmigen Kathode unter Zwischenlage des Separators durch das gepreßte aktive Material der negativen Elektrode ausgefüllt ist.

3. Nickel/Hydrid-Akkumulator nach Anspruch 2, dadurch gekennzeichnet, daß die negative Elektrode aus zylinderförmigen Pulverpreßlingen eines wasserstoffspeichernden Legierungsmaterials gebildet ist, die ebenfalls einen Stapel bilden und welche zur Aufnahme eines Stromableiters zentrische Bohrungen (4) besitzen.

4. Nickel/Hydrid-Akkumulator nach Anspruch 3, dadurch gekennzeichnet, daß der Stromableiter der negativen Elektrode aus einem an den Gehäusedeckel (6) angeschweißten Nagel (7) besteht, der in die zentrischen Bohrungen der negativen Elektrode eingedrückt ist.

5. Nickel/Hydrid-Akkumulator nach einem der Ansprüche 1 bis 4, dadurch gekennzeichnet, daß der Pulverpreßkörper der positiven Elektrode aus einer Trockenmischung von Nickelhydroxid, Nickelmetallpulver sowie Zusätzen von Kobaltmetallpulver und/oder Kobalthydroxid gebildet ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br>A | WO-A-92 20111 (BATTERY TECHNOLOGIES INC.)<br>* ZUSAMMENFASSUNG; SEITE 2, ZEILE 21-SEITE 3, ZEILE 8; SEITE 4, ZEILEN 17-23; SEITE 6, ZEILE 22-SEITE 7, ZEILE 7; SEITE 18, ZEILEN 28-31*<br>* Ansprüche 1,2,4,5,12,16,20; Abbildungen 1,3 *<br>--- | 1<br>4 | H01M10/34<br>H01M4/24<br>H01M10/28 |
| D,A | EP-A-0 419 221 (TOSHIBA BATTERY CO., LTD)<br>* Zusammenfassung *<br>--- | 5 | |
| A | EP-A-0 419 220 (TOSHIBA BATTERY CO., LTD)<br>* Seite 3, Zeile 1 - Seite 5, Zeile 25 *<br>--- | 5 | |
| A<br>D | FR-A-2 163 557 (GOULD INC.)<br>& DE-A-22 56 077 (GOULD INC.)<br>----- | | |

| | |
|---|---|
| | **RECHERCHIERTE SACHGEBIETE (Int.Cl.6)**<br><br>H01M |

Der vorliegende Recherchenbericht wurde für alle Patentansprüche erstellt

| Recherchenort | Abschlußdatum der Recherche | Prüfer |
|---|---|---|
| DEN HAAG | 10. Oktober 1995 | Fischer, W |

EPO FORM 1503 03.82 (P04C03)